# EUROPEAN PATENT APPLICATION

(11) **EP 4 512 860 A1**
(43) Date of publication of application: **26.02.2025**
(21) Application number: 23791626.7
(22) Date of filing: 28.03.2023
(51) Int. Cl.: C08L 83/04, C08K 3/08, C08K 5/5419, C09K 5/14

(54) **THERMALLY CONDUCTIVE SILICONE COMPOSITION**

(30) Priority: 22.04.2022 JP 2022070495
(71) Applicant: SHIN-ETSU CHEMICAL CO., LTD., Tokyo 1000005 (JP)
(72) Inventor: YAMADA, Kunihiro, Annaka-shi, Gunma 379-0224 (JP)
(74) Representative: Sonnenhauser, Thomas Martin
(86) International application number: PCT/JP2023/012407
(87) International publication number: WO 2023/203973

(57) **Abstract**

The present invention is a thermal conductive silicone composition including following components (A) to (D):
100 parts by mass of (A) an organopolysiloxane having kinematic viscosity at 25°C of 10 to 500,000 mm² / s ;
10 to 2,000 parts by mass of (B) a thermal conductive filler having an average particle diameter of 0.01 to 100 µm;
1,000 to 20,000 parts by mass of (C) gallium or a gallium alloy having a melting point of -20 to 100°C; and
0.1 to 100 parts by mass of (D) an alkoxysilane compound being represented by the following general formula (1):

R¹ₐR²_{b}Si(OR³)_{4-a-b} (1)

wherein R¹ independently represents an alkyl group having 6 to 20 carbon atoms, R² independently represents an unsubstituted or substituted monovalent hydrocarbon group having 1 to 10 carbon atoms, R³ independently represents an alkyl group having 1 to 6 carbon atoms, "a" represents an integer of 1 to 3, "b" represents an integer of 0 to 2, and a sum of a + b is an integer of 1 to 3. This configuration provides a thermal conductive silicone composition having excellent thermal conductivity and humidity resistance.

## Description

### TECHNICAL FIELD

The present invention relates to a thermal conductive silicone composition.

### BACKGROUND ART

For example, heat dissipaters such as heat sinks are widely used for many of heat-generating electronic components such as a CPU in order to prevent damage, performance deterioration, etc. due to rise in temperature in use. To efficiently conduct heat generated from the heat-generating electronic component to the heat dissipater, a thermal conductive material is commonly used between the heat-generating electronic component and the heat dissipater.

As the thermal conductive material, a heat-dissipating grease and a heat-dissipating sheet are commonly known. The heat-dissipating sheet can be conveniently mounted but generates gaps on, for example, an interface between the heat-generating electronic component and the heat dissipater, and thereby interfacial thermal resistance becomes large to cause insufficient thermal conductive performance. Meanwhile, the heat-dissipating grease has properties close to a liquid, and thus both the heat-generating electronic component and the heat dissipater can be closely adhered to reduce the interfacial thermal resistance without an effect due to roughness on the surfaces of both the member to reduce the interfacial thermal resistance. However, sufficient heat-dissipating performance cannot be obtained.

Accordingly, Patent Documents 1 to 5 propose a blend of a metal with a low melting point, a metal filler, etc. as a component for imparting thermal conductivity, for example. However, these thermal conductive materials still cannot yield a sufficient thermal conductive effect due to further increase in a heat-generating value with recent higher integration and higher speed of the heat-generating electronic component. Patent Document 6 shows remarkable improvement of the heat-dissipating performance but a disadvantage of weak humidity resistance.

### CITATION LIST

### PATENT LITERATURE

Patent Document 1: JP 2003-176414 A
Patent Document 2: JP 2005-112961 A
Patent Document 3: JP 2003-218296 A
Patent Document 4: JP 2004-039829 A
Patent Document 5: JP 2007-106809 A
Patent Document 6: JP 2021-169582 A

### SUMMARY OF INVENTION

### TECHNICAL PROBLEM

The present invention has been made to cope with the above problem, and an object of the present invention is to provide a thermal conductive silicone composition having excellent thermal conductivity and humidity resistance.

### SOLUTION TO PROBLEM

To solve the above problem, the present invention provides a thermal conductive silicone composition, comprising the following components (A) to (D):
100 parts by mass of (A) an organopolysiloxane having kinematic viscosity at 25°C of 10 to 500,000 mm² / s ;
10 to 2,000 parts by mass of (B) a thermal conductive filler having an average particle diameter of 0.01 to 100 µm;
1,000 to 20,000 parts by mass of (C) gallium or a gallium alloy having a melting point of -20 to 100°C; and
0.1 to 100 parts by mass of (D) an alkoxysilane compound being represented by the following general formula (1):

   R¹ₐR²_{b}Si(OR³)_{4-a-b} (1)
wherein R¹ independently represents an alkyl group having 6 to 20 carbon atoms, R² independently represents an unsubstituted or substituted monovalent hydrocarbon group having 1 to 10 carbon atoms, R³ independently represents an alkyl group having 1 to 6 carbon atoms, "a" represents an integer of 1 to 3, "b" represents an integer of 0 to 2, and a sum of a + b is an integer of 1 to 3.

Such a thermal conductive silicone composition provides excellent thermal conductivity and humidity resistance.

In an aspect of the present invention, the component (A) preferably has no alkenyl group.

Such a thermal conductive silicone composition provides excellent heat resistance.

In an aspect of the present invention, the component (B) is preferably one or more selected from zinc oxide powder, alumina powder, boron nitride powder, aluminum nitride powder, aluminum hydroxide powder, and magnesium oxide powder.

Such a thermal conductive silicone composition provides higher thermal conductivity.

In an aspect of the present invention, the component (A) is preferably an organopolysiloxane represented by the following average composition formula (2) :

R⁴_{c}SiO_{(4-c)/2} (2)

wherein R⁴ each independently represents an unsubstituted or substituted monovalent hydrocarbon group having 1 to 18 carbon atoms and having no alkenyl group, and 1.8 ≤ c ≤ 2.2.

Such a thermal conductive silicone composition can have good flowability.

In an aspect of the present invention, the component (A) is preferably a material containing a hydrolysable-group-containing organopolysiloxane in an amount of 10 to 100 mass% relative to a total mass of the component (A), the hydrolysable-group-containing organopolysiloxane being represented by the following general formula (3): 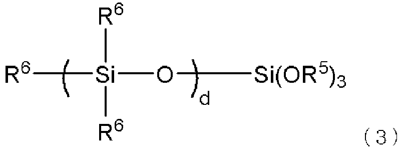 wherein R⁵ represents an alkyl group having 1 to 6 carbon atoms, R⁶ each independently represents an unsubstituted or substituted monovalent hydrocarbon group having 1 to 18 carbon atoms and having no alkenyl group, and "d" represents an integer of 5 to 120.

With such a thermal conductive silicone composition, the silicone composition can be highly filled with the powder.

In an aspect of the present invention, the gallium alloy of the component (C) is preferably one or more selected from a Ga-In alloy, a Ga-Sn-Zn alloy, a Ga-In-Sn alloy, and a Ga-In-Bi-Sn alloy.

Such a thermal conductive silicone composition can provide a thermal conductive silicone composition having excellent operability in a composition-preparing step.

### ADVANTAGEOUS EFFECTS OF INVENTION

As above, the thermal conductive silicone composition of the present invention can provide a thermal conductive silicone composition having excellent thermal conductivity and humidity resistance. This silicone composition can be suitably used as the heat-dissipating grease.

### DESCRIPTION OF EMBODIMENTS

As noted above, there has been a demand for development of a thermal conductive silicone composition having excellent thermal conductivity and humidity resistance.

The present inventors have made earnest study to achieve the above object, and consequently found that excellent thermal conductivity and humidity-resistant performance are exhibited by mixing a thermal conductive filler, a low-melting-point metal having a melting point of -20 to 100°C, and a specific alkoxysilane compound with a specific organopolysiloxane at an appropriate ratio. This finding has led to completion of the present invention.

Specifically, the present invention is a thermal conductive silicone composition, comprising the following components (A) to (D):
100 parts by mass of (A) an organopolysiloxane having kinematic viscosity at 25°C of 10 to 500,000 mm² / s ;
10 to 2,000 parts by mass of (B) a thermal conductive filler having an average particle diameter of 0.01 to 100 µm;
1,000 to 20,000 parts by mass of (C) gallium or a gallium alloy having a melting point of -20 to 100°C; and
0.1 to 100 parts by mass of (D) an alkoxysilane compound being represented by the following general formula (1):

   R¹ₐR²_{b}Si (OR³) _{4-a-b} (1)
wherein R¹ independently represents an alkyl group having 6 to 20 carbon atoms, R² independently represents an unsubstituted or substituted monovalent hydrocarbon group having 1 to 10 carbon atoms, R³ independently represents an alkyl group having 1 to 6 carbon atoms, "a" represents an integer of 1 to 3, "b" represents an integer of 0 to 2, and a sum of a + b is an integer of 1 to 3.

Hereinafter, the present invention will be described in detail, but the present invention is not limited thereto.

### <Thermal Conductive Silicone Composition>

The thermal conductive silicone composition of the present invention contains the following components (A) to (D), and can be suitably used as the heat-dissipating grease, for example.

### Component (A)

The component (A) is an organopolysiloxane having kinematic viscosity at 25°C of 10 to 500,000 mm²/s, preferably 30 to 100,000 mm²/s, and further preferably 50 to 10,000 mm²/s. If the kinematic viscosity of the organopolysiloxane is lower than the above lower limit, oil-bleeding tends to occur when the grease is formed. If the kinematic viscosity is higher than the above upper limit, extensibility of the silicone composition becomes poor, which is unpreferable. In the present invention, the kinematic viscosity of the organopolysiloxane is a value measured at 25°C with an Ostwald viscosimeter.

In the present invention, the organopolysiloxane of the component (A) may be any as long as the organopolysiloxane has the kinematic viscosity, and a conventionally known organopolysiloxane may be used. The molecular structure of the organopolysiloxane is not particularly limited, and may be any of linear, branched, and cyclic structures. Particularly, the organopolysiloxane preferably has a linear structure in which the main chain has repetition of a diorganosiloxane unit, and both the terminals of the molecular chain are blocked with a triorganosiloxy group. The organopolysiloxane may be used singly, or may be used in combination of two or more thereof. Note that the component (A) preferably has no alkenyl group from the viewpoint of heat resistance.

The organopolysiloxane of the component (A) may be an organopolysiloxane represented by the following average composition formula (2):

R⁴_{c}SiO_{(4-c)/2} (2)

wherein R⁴ each independently represents an unsubstituted or substituted monovalent hydrocarbon group having 1 to 18 carbon atoms and having no alkenyl group, and 1.8 ≤ c ≤ 2.2.

In the general formula (2), R⁴ each independently represents an unsubstituted or substituted monovalent hydrocarbon group having 1 to 18, preferably 1 to 14, carbon atoms and having no alkenyl group. Examples of the monovalent hydrocarbon group include: alkyl groups such as a methyl group, an ethyl group, a propyl group, a hexyl group, an octyl group, a decyl group, a dodecyl group, a tetradecyl group, a hexadecyl group, and an octadecyl group; cycloalkyl groups such as a cyclopentyl group and a cyclohexyl group; aryl groups such as a phenyl group and a tolyl group; aralkyl groups such as a 2-phenylethyl group and a 2-methyl-2-phenylethyl group; or derivatives in which a part or all of hydrogen atoms in these groups are substituted with a halogen atom such as fluorine, bromine, and chlorine, a cyano group, etc., for example, a 3,3,3-trifluoropropyl group, a 2-(perfluorobutyl)ethyl group, a 2-(perfluorooctyl)ethyl group, and a p-chlorophenyl group. R⁴ preferably represents a methyl group or a phenyl group.

In the general formula (2), "c" is within a range of 1.8 to 2.2, and particularly preferably a number within a range of 1.9 to 2.1. "c" within the above range allows the obtained thermal conductive silicone composition to have good flowability.

The organopolysiloxane represented by the average composition formula (2) is preferably a linear organopolysiloxane represented by the following general formula (4).

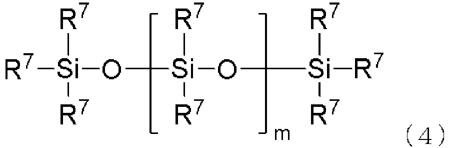

In the general formula (4), R⁷ each independently represents an unsubstituted or substituted monovalent hydrocarbon group having 1 to 18, preferably 1 to 14, carbon atoms and having no alkenyl group. Examples of the monovalent hydrocarbon group include the groups described as R⁴. Specifically, all R⁷ at both the terminals preferably represent a methyl group. "m" is a number so that the kinematic viscosity at 25°C of the organopolysiloxane is 10 to 500,000 mm²/s, preferably 30 to 100,000 mm²/s, and further preferably 50 to 10,000 mm²/s.

Specific examples thereof include the following components.

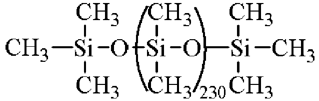

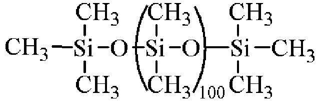

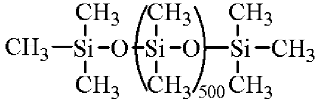

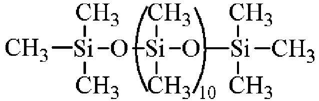

The component (A) may contain an organopolysiloxane represented by the following general formula (3) and having a hydrolysable group, in addition to the organopolysiloxane represented by the average composition formula (4). A content of the hydrolysable organopolysiloxane represented by the following general formula (3) in the component (A) is preferably an amount of 10 to 100 mass%, more preferably an amount of 30 to 95 mass%, and further preferably an amount of 50 to 90 mass% relative to a total mass of the component (A). 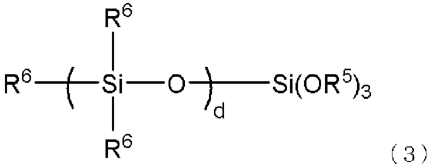 wherein R⁵ represents an alkyl group having 1 to 6 carbon atoms, R⁶ each independently represents an unsubstituted or substituted monovalent hydrocarbon group having 1 to 18 carbon atoms and having no alkenyl group, and "d" represents an integer of 5 to 120.

The organopolysiloxane represented by the general formula (3) assists highly filling the silicone component with the powder. Further, in the silicone composition containing the organopolysiloxane, surfaces of the powder are coated with the organopolysiloxane to hardly cause aggregation of the powder each other. Since this effect is retained even at high temperature, the silicone composition has improved heat resistance. With the organopolysiloxane represented by the general formula (3), the surfaces of the powder can be subjected to a hydrophobizing treatment.

In the general formula (3), R⁵ represents an alkyl group having 1 to 6 carbon atoms. Examples of R⁵ include an alkyl group having 1 to 6 carbon atoms such as a methyl group, an ethyl group, and a propyl group, and particularly preferably a methyl group and an ethyl group. R⁶ each independently represents an unsubstituted or substituted monovalent hydrocarbon group having 1 to 18, preferably 1 to 10, carbon atoms and having no alkenyl group. Examples of the monovalent hydrocarbon group include: alkyl groups such as a methyl group, an ethyl group, a propyl group, a hexyl group, an octyl group, a decyl group, a dodecyl group, a tetradecyl group, a hexadecyl group, and an octadecyl group; cycloalkyl groups such as a cyclopentyl group and a cyclohexyl group; aryl groups such as a phenyl group and a tolyl group; aralkyl groups such as a 2-phenylethyl group and a 2-methyl-2-phenylethyl group; or derivatives in which a part or all of hydrogen atoms in these groups are substituted with a halogen atom such as fluorine, bromine, and chlorine, a cyano group, etc., for example, a 3,3,3-trifluoropropyl group, a 2-(perfluorobutyl)ethyl group, a 2-(perfluorooctyl)ethyl group, and a p-chlorophenyl group. R⁶ particularly preferably represents a methyl group. In the general formula (3), "d" preferably represents an integer of 5 to 120, and more preferably an integer of 10 to 90. Note that "d" is a value satisfying that the compound represented by the general formula (3) has kinematic viscosity at 25°C of 10 to 500,000 mm²/s, preferably 30 to 100,000 mm²/s.

Specific examples of this organopolysiloxane having a hydrolysable group include the following components.

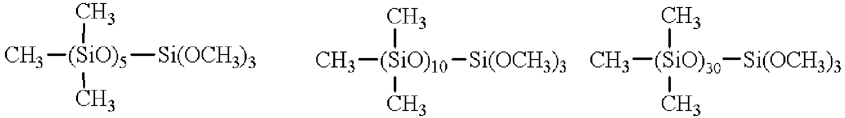

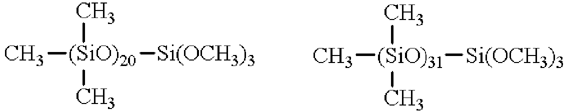

### Component (B)

The component (B) is a thermal conductive filler. A type of the thermal conductive filler is not particularly limited, and a powder conventionally used for a heat-dissipating (thermal conductive) grease may be used. Specifically, a filler having high thermal conductance is suitable, and at least one or two or more selected from zinc oxide powder, alumina powder, boron nitride powder, aluminum nitride powder, aluminum hydroxide powder, and magnesium oxide powder is preferable. These thermal conductive fillers (inorganic compound powders) may be subjected to a hydrophobizing treatment on the surfaces as necessary with an organosilane, an organosilazane, an organopolysiloxane, an organic fluorine compound, etc. for use. The hydrophobizing treatment may also be performed with the organopolysiloxane represented by the general formula (3) .

The thermal conductive filler preferably has an average particle diameter of 0.01 to 100 µm, more preferably 0.1 to 80 um, and further preferably 0.5 to 50 um. An average particle diameter of the thermal conductive filler of higher than the above upper limit or lower than the above lower limit is unpreferable because the filling rate in the obtained silicone composition cannot be increased. These thermal conductive fillers may be used singly, or two or more having different average particle diameters may be mixed for use. The average particle diameter is a volume-based cumulative average diameter. This average particle diameter may be measured by using Microtrac MT3300EX, which is a particle size analyzer produced by NIKKISO CO., LTD.

A blending amount of the thermal conductive filler is within a range of 10 to 2,000 parts by mass, and preferably within a range of 50 to 1,500 parts by mass relative to 100 parts by mass of the component (A). The blending amount is further preferably within a range of 100 to 1,000 parts by mass. If the blending amount is lower than the above lower limit, sufficient thermal conductance cannot be imparted to the silicone composition. If the blending amount is higher than the above upper limit, the silicone composition has high viscosity to cause difficulty in handling. Thus, the blending amount lower than the above lower limit or higher than the above upper limit causes difficulty in formation as grease.

### Component (C)

The component (C) of the present invention is gallium or a gallium alloy, and necessarily has a melting point within a range of -20 to 100°C. It is difficult to produce a material having a melting point of lower than -20°C, and thus such a material is economically unpreferable. A material having a melting point of higher than 100°C does not quickly melt in a composition-preparing step, resulting in poor operability, and such a material precipitates in production to cause non-uniformity. Thus, the gallium or the gallium alloy having a melting point within a range of -20 to 100°C is an appropriate range and is an economically needed requirement in operation. The melting point is particularly preferably within a range of -10 to 50°C.

Metal gallium has a melting point of 29.8°C. Examples of representative gallium alloys having a melting point within the above range include: gallium-indium alloys such as Ga-In (mass ratio = 75.4:24.6, melting point = 15.7°C); gallium-tin-zinc alloys such as Ga-Sn-Zn (mass ratio = 82:12:6, melting point = 17°C); gallium-indium-tin alloys such as Ga-In-Sn (mass ratio = 21.5:16.0:62.5, melting point = 10.7°C, mass ratio = 62.0:25.0:13.0, melting point = 5°C, and mass ratio = 68.5:21.5:10, melting point = -19°C); and gallium-indium-bismuth-tin alloys such as Ga-In-Bi-Sn (mass ratio = 9.4:47.3:24.7:18.6, melting point = 48.0°C).

This component (C) may be used singly, or may be used in combination of two or more thereof.

The gallium or the alloy thereof present in the composition of the present invention forms liquid fine particles or solid fine particles typically having an approximately spherical shape, but may contain an amorphous shape. The average particle diameter is typically 0.1 to 200 µm, and particularly preferably 10 to 100 um. The average particle diameter of equal to or higher than the above lower limit does not excessively increase the viscosity of the composition, and provides excellent extensibility and consequently provides excellent coating operability. In contrast, the average particle diameter of lower than or equal to the above upper limit does not cause separation. The dispersion state of the fine particles having the above shape and average particle diameter is retained even when the present composition is stored at normal temperature because the present composition has an appropriate viscosity.

Note that this particle diameter of the component (C) is a value being an automatically measured average particle diameter with an image of particles to be measured photographed with a microscope by automatic area measurement with image binarization. For example, the particle diameter may be measured with a microscope VHX-8000, produced by KEYENCE CORPORATION. The particles to be measured are sandwiched with two slide glasses and photographed with a microscope, and the average particle diameter can be automatically measured with an attached image processing function (automatic area measurement with image binarization).

The blending amount of this component (C) is 1,000 to 20,000 parts by mass, preferably 2,000 to 15,000 parts by mass, and further preferably 3,000 to 10,000 parts by mass relative to 100 parts by mass of the component (A). If the blending amount is less than 1,000 parts by mass, the thermal conductance becomes low to fail to yield sufficient heat-dissipating performance when the composition is thick. If the blending amount is more than 20,000 parts by mass, it is difficult to prepare a uniform composition, and the composition has an excessively high viscosity. Thus, there is a problem of failure to obtain the grease composition with extensibility.

### Component (D)

The component (D) can not only assist high filling of the powder in the silicone composition of the present invention but also improve humidity resistance of the component (C). The gallium or the gallium alloy itself originally has a disadvantage of oxidation proceeding to consequently increase the thermal resistance of the silicone composition when exposed under high humidity for a long time. However, containing the component (D) can retain the performance without increase in the thermal resistance even under high humidity.

The component (D) is an alkoxysilane compound represented by the following general formula (1),

R¹ₐR²_{b}Si (OR³) _{4-a-b} (1)

wherein R¹ independently represents an alkyl group having 6 to 20 carbon atoms, R² independently represents an unsubstituted or substituted monovalent hydrocarbon group having 1 to 10 carbon atoms, R³ independently represents an alkyl group having 1 to 6 carbon atoms, "a" represents an integer of 1 to 3, "b" represents an integer of 0 to 2, and a sum of a + b is an integer of 1 to 3.

R¹ independently represents an alkyl group having 6 to 20 carbon atoms, and preferably an alkyl group having 10 to 20, further preferably 16 to 20, carbon atoms.

Examples of R¹ in the general formula include a hexyl group, an octyl group, a nonyl group, a decyl group, a dodecyl group, a tetradecyl group, a hexadecyl group, an octadecyl group, a nonadecyl group, and icosyl group. R¹ preferably represents a decyl group, a dodecyl group, a tetradecyl group, a hexadecyl group, an octadecyl group, or an icosyl group, and further preferably a hexadecyl group, an octadecyl group, or an icosyl group.

If the number of carbon atoms is less than 6, improvement of wettability of the component (B) and the component (C) is insufficient. If the number of carbon atoms is 21 or more, the organosilane solidifies at normal temperature, which is thus inconvenient in handling and deteriorates low-temperature properties of the obtained composition. Specifically, the number of carbon atoms is preferably 10 to 20, and particularly preferably 16 to 20 for improving the humidity resistance.

The R² independently represents an unsubstituted or substituted monovalent hydrocarbon group having 1 to 10, preferably 1 to 8, carbon atoms. Examples of R² include: alkyl groups such as a methyl group, an ethyl group, a propyl group, a hexyl group, and an octyl group; cycloalkyl groups such as a cyclopentyl group and a cyclohexyl group; alkenyl groups such as a vinyl group and allyl group; aryl groups such as a phenyl group and a tolyl group; aralkyl groups such as a 2-phenylethyl group and a 2-methyl-2-phenylethyl group; and halogenated hydrocarbon groups such as a 3,3,3-trifluoropropyl group, a 2-(nonafluorobutyl)ethyl group, a 2-(heptadecafluorooctyl)ethyl group, and a p-chlorophenyl group. Among these, a methyl group and an ethyl group are particularly preferable.

The R³ independently represents an alkyl group having 1 to 6 carbon atoms. Examples of the R³ include alkyl groups such as a methyl group, an ethyl group, a propyl group, a butyl group, a pentyl group, and a hexyl group. Among these, a methyl group and an ethyl group are particularly preferable.

Specific preferable examples of this component (D) include the following compounds.

C₆H₁₃Si(OCH₃)₃

C₁₂H₂₅Si(OCH₃)₃

C₁₀H₂₁Si(CH₃)(OCH₃)₂

C₁₀H₂₁Si(C₆H₅)(OCH₃)₂

C₁₀H₂₁Si(CH₃)(OC₂H₅)₂

C₁₀H₂₁Si(CH=CH₂)(OCH₃)₂

C₁₀H₂₁Si (CH₂CH₂CF₃) (OCH₃) ₂

C₁₀H₂₁Si(OCH₃)₃

C₁₂H₂₅Si(OC₂H₅)₃

C₁₆H₃₃Si(OCH₃)₃

C₁₈H₃₇Si(OCH₃)₃

C₂₀H₄₁Si(OCH₃)₃

C₁₈H₃₇Si(OC₂H₅)₃

This component (D) may be used singly, or may be used in combination of two or more thereof. The blending amount is 0.1 to 100 parts by mass, and more preferably 1 to 50 parts by mass relative to 100 parts by mass of the component (A). The blending amount is further preferably 10 to 50 parts by mass. If the blending amount is excessively large, the effect of improving the humidity resistance does not increase, which is uneconomical. In addition, the composition of the present invention may be gradually hardened with leaving in an open system due to the somewhat volatile component (D). If the blending amount is excessively low, proceeding of the oxidation cannot be sufficiently prevented to deteriorate the value of thermal resistance.

### (Other Components)

In the silicone composition of the present invention, conventionally known oxidation inhibitor, dye, pigment, flame retardant, precipitation inhibitor, thixotropy improver, etc. may be blended as necessary in an amount according to the purpose.

A method for producing the thermal conductive silicone composition of the present invention may be any according to a method for producing a conventionally known silicone grease composition, and is not particularly limited. For example, the thermal conductive silicone composition of the present invention may be produced by mixing the components (A) to (D) and other components as necessary with a mixer such as Trimix, Twinmix, or Planetary Mixer (the all are mixers produced by Inoue Manufacturing Co., Ltd., registered trademarks), Ultramixer (a mixer produced by Mizuho Industrial Co., Ltd., registered trademark), and a Hivis Disper Mix (a mixer produced by Tokushu Kikai Kogyo Co., Ltd., registered trademark) for 30 minutes to 4 hours. When the component (C) is solid at room temperature, the component (C) is desirably melted in advance with an oven etc. before the blending. The mixing may be performed while heating at a temperature within a range of 50 to 150°C as necessary.

The thermal conductive silicone composition of the present invention has an absolute viscosity measured at 25°C of preferably 10 to 500 Pa.s, more preferably 30 to 450 Pa·s, and further preferably 50 to 400 Pa·s. When the absolute viscosity is lower than or equal to the above upper limit, the operability becomes good. When the absolute viscosity is higher than or equal to the above lower limit, the composition does not flow out after applied on a substrate, which can provide good grease. The above absolute viscosity can be achieved by preparing the components at the above blending amounts. The absolute viscosity can be measured by using model PC-1TL (10 rpm), produced by Malcom.

The thermal conductive silicone composition of the present invention may have a thermal conductance at 25°C of as high as preferably 3.0 W/mK or more, more preferably 4.0 W/mK or more, and further preferably 5.0 W/mK or more.

The thermal conductive silicone composition of the present invention exhibits a property that the value of the thermal resistance hardly increases even after the composition is put under high temperature and high humidity. Specifically, a thermal resistance value after exposure under a condition of 130°C / 85% RH for 100 hours does not increase to double or higher compared with the initial value, and it can be said that the composition has high reliability under high temperature and high humidity.

The thermal conductive silicone composition of the present invention can be used as grease. A use aspect of the silicone composition of the present invention as grease is not particularly limited, and may be used in the same manner as conventional heat-dissipating (thermal conductive) silicone grease. For example, the silicone composition can be suitably used as an aspect that the grease is sandwiched between an electric or electronic component such as an LSI or another heat-generating member and a cooling member or a heat-dissipating member, and heat from the heat-generating member is conducted to the cooling member or the heat-dissipating member for heat dissipation. Since the silicone composition of the present invention has a low viscosity, a high thermal conductance, and extremely excellent humidity resistance, the silicone composition can be suitably used as a heat-dissipating (thermal conductive) grease for a semiconductor device of a high-quality model, etc.

### EXAMPLE

Hereinafter, the present invention will be specifically described by using Examples and Comparative Examples, but the present invention is not limited thereto.

### Component (A)

(A-1) Dimethylpolysiloxane having both terminals blocked with a trimethylsilyl group and having a kinematic viscosity at 25°C of 1,000 mm²/s.
(A-2) Dimethylpolysiloxane having both terminals blocked with a trimethylsilyl group and having a kinematic viscosity at 25°C of 5,000 mm²/s.
(A-3) An organopolysiloxane having a kinematic viscosity at 25°C of 35 mm²/s and represented by the following formula (7).

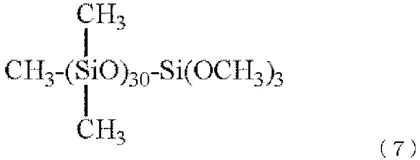

### Component (B)

(B-1) Zinc oxide powder: average particle diameter of 1.0 um
(B-2) Alumina powder: average particle diameter of 8.9 µm
(B-3) Boron nitride powder: average particle diameter of 2.0 um
(B-4) Aluminum nitride powder: average particle diameter of 6.8 um
(B-5) Aluminum hydroxide powder: average particle shape of 25 um
(B-6) Magnesium oxide powder: average particle shape of 45 um

### <Particle Diameter Measurement>

The particle diameter of the thermal conductive filler (component (B)) was a volume-based cumulative average diameter measured with Microtrac MT3300EX, which was a particle size analyzer produced by NIKKISO CO., LTD.

### Component (C)

(C-1) Metal gallium (melting point = 29.8°C)
(C-2) Ga-In alloy (mass ratio = 75.4:24.6, melting point = 15.7°C)
(C-3) Ga-In-Sn alloy (mass ratio = 62.0:25.0:13.0, melting point = 5.0°C)
(C-4) Ga-In-Sn alloy (mass ratio = 68.5:21.5:10, melting point = -19°C)
(C-5) Metal indium (melting point = 156.2°C) <for comparison>

### Component (D)

(D-1) C₁₀H₂₁Si(OCH₃)₃
(D-2) C₁₆H₃₃Si(OCH₃)₃
(D-3) C₁₈H₃₇Si(OCH₃)₃
(D-4) CH₃Si(OCH₃)₃ <for comparison>

### Examples 1 to 7 and Comparative Examples 1 to 8

### Preparation of Silicone Composition

The above components (A) to (D) were fed into Planetary Mixer (produced by Inoue Manufacturing Co., Ltd., registered trademark) having a capacity of five litters according to a composition and blending amounts shown in the following Tables 1 and 2, and the mixture was stirred at room temperature for 1 hour to prepare a silicone composition.

Note that (C-1) and (C-5), which had a higher melting point than room temperature, were dissolved in advance with an oven before feeding.

### <Measurement of Viscosity>

The absolute viscosity at 25°C of the composition was measured with model PC-1TL (10 rpm), produced by Malcom.

### <Measurement of Thermal Conductance>

All the thermal conductance was measured at 25°C with TPS-2500S, produced by Kyoto Electronics Manufacturing Co., Ltd.

### <Measurement of Particle Diameter of Gallium or Alloy in Composition>

The composition was sandwiched with two microscopes, photographed with a microscope VHX-8000, produced by KEYENCE CORPORATION, and the average particle diameter was automatically measured with an attached image processing function (automatic area measurement with image binarization).

### <Thickness of Composition>

Each of the compositions obtained above (except for Comparative Examples 1, 2, 4, 6, and 7) was applied on an entire surface of a standard aluminum plate (diameter: 1.26 mm, thickness: 1.0 mm), and another standard aluminum plate was overlapped from above for applying a load of 2 kgf over 15 minutes to press the composition. Note that the thickness of each of the compositions was calculated by subtracting the thickness of the two standard aluminum plates from the thickness of the entirety (the thickness of the two aluminum plates and the composition).

The thickness of the aluminum plate and the thickness of the composition were measured by using a micrometer (produced by Mitutoyo Corporation, model number; M820-25VA).

### <Measurement of Thermal Resistance>

By using the sample for thermal resistance, the thermal resistance (mm²·K/W) of each of the compositions was measured by using a thermal resistance meter (produced by NETZSCH-Geratebau GmbH, model: LFA447).

Note that measured were the thermal resistance immediately after the preparation of the sample for thermal resistance and the thermal resistance of these samples for thermal resistance after exposure under a condition of 130°C / 85% RH for 100 hours by using a highly accelerated lifetime tester (model: EHS-212M), produced by ESPEC CORP.

As judgement, a case where the thermal resistance after the exposure under the condition of 130°C / 85% RH for 100 hours increases to double or higher compared with the initial value can be said to low reliability under high temperature and high humidity.

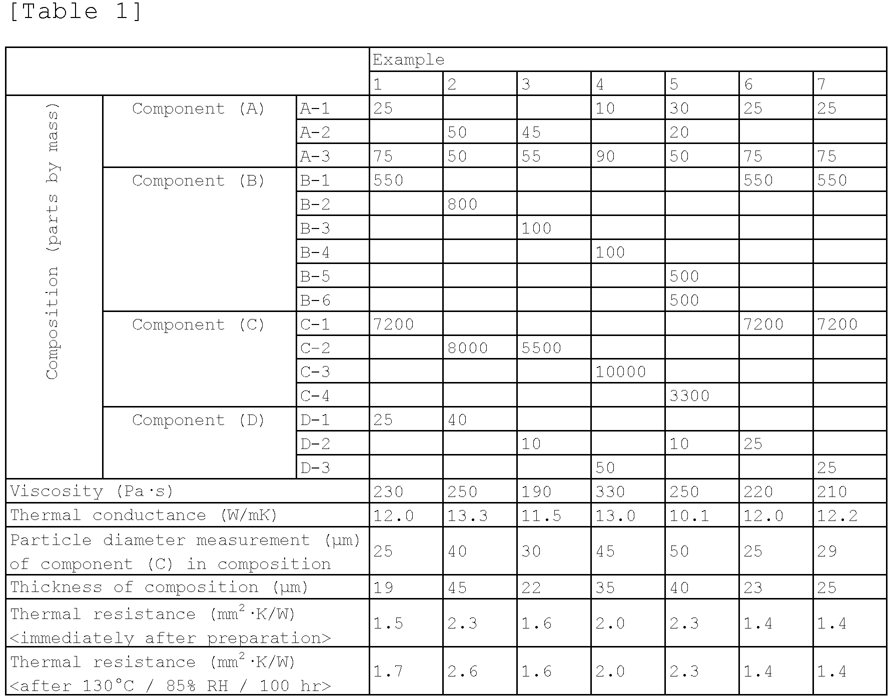

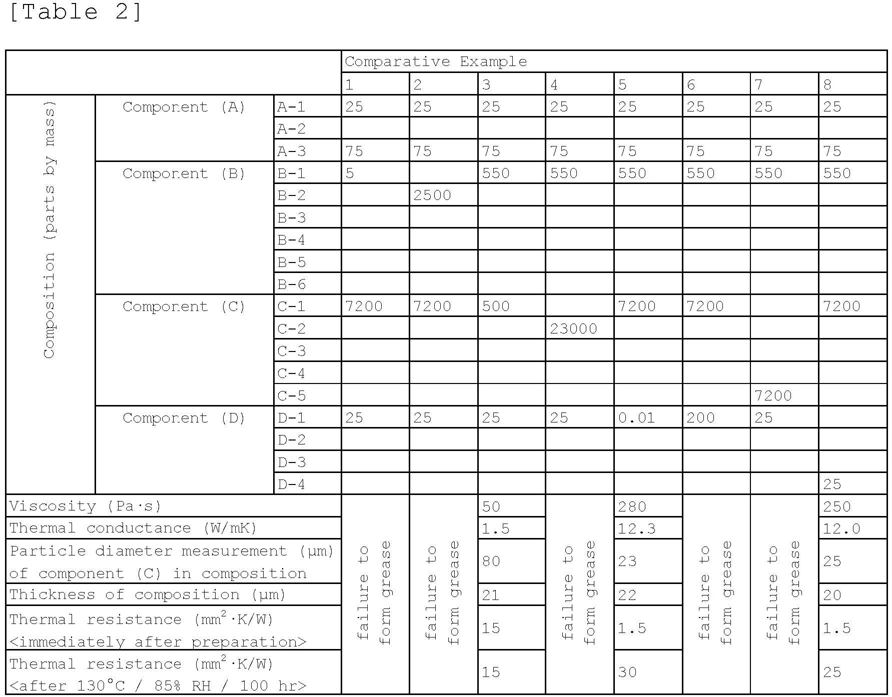

From the results in Table 1, the thermal conductive silicone composition of the present invention exhibited high thermal conductivity and a sufficiently low value of thermal resistance, and the value of the thermal resistance after putting under high temperature and high humidity was as sufficiently low as about 1.13 times even when the value changed compared with the value before putting under high temperature and high humidity. Meanwhile, Comparative Examples 1, 2, 4, 6, and 7 failed to prepare grease. Comparative Example 3 exhibited an insufficient thermal conductance. Comparative Examples 5 and 8 exhibited a sufficient thermal conductance, but the value of the thermal resistance after putting under high temperature and high humidity respectively increased to 20 times and about 16 times.

The present specification includes the following aspects.
[1]: A thermal conductive silicone composition, comprising the following components (A) to (D):
   100 parts by mass of (A) an organopolysiloxane having kinematic viscosity at 25°C of 10 to 500,000 mm²/s;
   10 to 2,000 parts by mass of (B) a thermal conductive filler having an average particle diameter of 0.01 to 100 µm;
   1,000 to 20,000 parts by mass of (C) gallium or a gallium alloy having a melting point of -20 to 100°C; and
   0.1 to 100 parts by mass of (D) an alkoxysilane compound being represented by the following general formula (1):

      R¹ₐR²_{b}Si (OR³) _{4-a-b} (1)
   wherein R¹ independently represents an alkyl group having 6 to 20 carbon atoms, R² independently represents an unsubstituted or substituted monovalent hydrocarbon group having 1 to 10 carbon atoms, R³ independently represents an alkyl group having 1 to 6 carbon atoms, "a" represents an integer of 1 to 3, "b" represents an integer of 0 to 2, and a sum of a + b is an integer of 1 to 3.
[2]: The thermal conductive silicone composition according to [1], wherein the component (A) has no alkenyl group.
[3]: The thermal conductive silicone composition according to [1] or [2], wherein the component (B) is one or more selected from zinc oxide powder, alumina powder, boron nitride powder, aluminum nitride powder, aluminum hydroxide powder, and magnesium oxide powder.
[4]: The thermal conductive silicone composition according to any one of [1] to [3], wherein the component (A) is an organopolysiloxane represented by the following average composition formula (2):

   R⁴_{c}SiO_{(4-c)/2} (2)

   wherein R⁴ each independently represents an unsubstituted or substituted monovalent hydrocarbon group having 1 to 18 carbon atoms and having no alkenyl group, and 1.8 ≤ c ≤ 2.2.
[5]: The thermal conductive silicone composition according to any one of [1] to [4], wherein the component (A) is a material containing a hydrolysable-group-containing organopolysiloxane in an amount of 10 to 100 mass% relative to a total mass of the component (A), the hydrolysable-group-containing organopolysiloxane being represented by the following general formula (3): 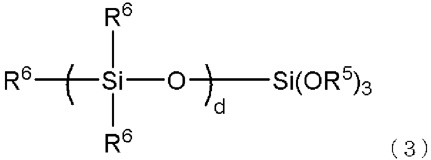 wherein R⁵ represents an alkyl group having 1 to 6 carbon atoms, R⁶ each independently represents an unsubstituted or substituted monovalent hydrocarbon group having 1 to 18 carbon atoms and having no alkenyl group, and "d" represents an integer of 5 to 120.
[6]: The thermal conductive silicone composition according to any one of [1] to [5], wherein the gallium alloy of the component (C) is one or more selected from a Ga-In alloy, a Ga-Sn-Zn alloy, a Ga-In-Sn alloy, and a Ga-In-Bi-Sn alloy.

It should be noted that the present invention is not limited to the above-described embodiments. The embodiments are just examples, and any examples that approximately have the same feature and demonstrate the same functions and effects as those in the technical concept disclosed in claims of the present invention are included in the technical scope of the present invention.

## Claims

1. A thermal conductive silicone composition, comprising the following components (A) to (D):
100 parts by mass of (A) an organopolysiloxane having kinematic viscosity at 25°C of 10 to 500,000 mm² / s ;
10 to 2,000 parts by mass of (B) a thermal conductive filler having an average particle diameter of 0.01 to 100 µm;
1,000 to 20,000 parts by mass of (C) gallium or a gallium alloy having a melting point of -20 to 100°C; and
0.1 to 100 parts by mass of (D) an alkoxysilane compound being represented by the following general formula (1):
R¹ₐR²_{b}Si(OR³)_{4-a-b} (1)
wherein R¹ independently represents an alkyl group having 6 to 20 carbon atoms, R² independently represents an unsubstituted or substituted monovalent hydrocarbon group having 1 to 10 carbon atoms, R³ independently represents an alkyl group having 1 to 6 carbon atoms, "a" represents an integer of 1 to 3, "b" represents an integer of 0 to 2, and a sum of a + b is an integer of 1 to 3.

2. The thermal conductive silicone composition according to claim 1, wherein the component (A) has no alkenyl group.

3. The thermal conductive silicone composition according to claim 1, wherein the component (B) is one or more selected from zinc oxide powder, alumina powder, boron nitride powder, aluminum nitride powder, aluminum hydroxide powder, and magnesium oxide powder.

4. The thermal conductive silicone composition according to claim 2, wherein the component (B) is one or more selected from zinc oxide powder, alumina powder, boron nitride powder, aluminum nitride powder, aluminum hydroxide powder, and magnesium oxide powder.

5. The thermal conductive silicone composition according to claim 1, wherein the component (A) is an organopolysiloxane represented by the following average composition formula (2):
R⁴_{c}SiO_{(4-c)/2} (2)
wherein R⁴ each independently represents an unsubstituted or substituted monovalent hydrocarbon group having 1 to 18 carbon atoms and having no alkenyl group, and 1.8 ≤ c ≤ 2.2.

6. The thermal conductive silicone composition according to claim 2, wherein the component (A) is an organopolysiloxane represented by the following average composition formula (2):
R⁴_{c}SiO_{(4-c)/2} (2)
wherein R⁴ each independently represents an unsubstituted or substituted monovalent hydrocarbon group having 1 to 18 carbon atoms and having no alkenyl group, and 1.8 ≤ c ≤ 2.2.

7. The thermal conductive silicone composition according to claim 3, wherein the component (A) is an organopolysiloxane represented by the following average composition formula (2):
R⁴_{c}SiO(_{4-c)/2} (2)
wherein R⁴ each independently represents an unsubstituted or substituted monovalent hydrocarbon group having 1 to 18 carbon atoms and having no alkenyl group, and 1.8 ≤ c ≤ 2.2.

8. The thermal conductive silicone composition according to claim 4, wherein the component (A) is an organopolysiloxane represented by the following average composition formula (2):
R⁴_{c}Sio_{(4-c)/2} (2)
wherein R⁴ each independently represents an unsubstituted or substituted monovalent hydrocarbon group having 1 to 18 carbon atoms and having no alkenyl group, and 1.8 ≤ c ≤ 2.2.

9. The thermal conductive silicone composition according to any one of claims 1 to 8, wherein the component (A) is a material containing a hydrolysable-group-containing organopolysiloxane in an amount of 10 to 100 mass% relative to a total mass of the component (A), the hydrolysable-group-containing organopolysiloxane being represented by the following general formula (3): 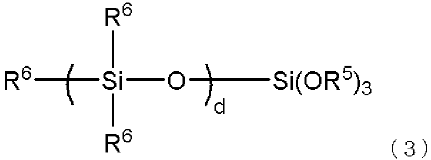 wherein R⁵ represents an alkyl group having 1 to 6 carbon atoms, R⁶ each independently represents an unsubstituted or substituted monovalent hydrocarbon group having 1 to 18 carbon atoms and having no alkenyl group, and "d" represents an integer of 5 to 120.

10. The thermal conductive silicone composition according to any one of claims 1 to 8, wherein the gallium alloy of the component (C) is one or more selected from a Ga-In alloy, a Ga-Sn-Zn alloy, a Ga-In-Sn alloy, and a Ga-In-Bi-Sn alloy.

11. The thermal conductive silicone composition according to claim 9, wherein the gallium alloy of the component (C) is one or more selected from a Ga-In alloy, a Ga-Sn-Zn alloy, a Ga-In-Sn alloy, and a Ga-In-Bi-Sn alloy.
